# EUROPÄISCHE PATENTANMELDUNG

(11) **EP 2 110 784 A1**
(43) Veröffentlichungstag der Anmeldung: **21.10.2009**
(21) Anmeldenummer: 08007274.7
(22) Anmeldetag: 14.04.2008
(51) Int. Cl.: G06Q 40/00, G06N 3/12

(54) **Verfahren und Expertensystem zum Bewerten eines Objekts**

(71) Anmelder: INFORM Institut für Operations Research und Management GmbH, 52076 Aachen (DE)
(72) Erfinder: Weiler, Adrian, 52074 Aachen (DE); Droste, Stefan, 52076 Aachen (DE)
(74) Vertreter: Bauer, Dirk

(57) **Zusammenfassung**

Offenbart ist zum Einen ein Verfahren zum Bewerten eines Objekts, wobei ein Expertensystem für eine Regel einen Wert aus Eigenschaften des Objekts bestimmt, den Wert mit einem Gewicht aus [0, 1] wichtet und anhand des Werts das Objekt bewertet und zum Andern ein Expertensystem zum Bewerten eines Objekts anhand von Eigenschaften des Objekts, mit einem Regeleditor zum Definieren von Regeln für die Bewertung mit je einem Gewicht aus [0, 1], mit einem Regelmodul zum Bestimmen eines Werts je Regel aus den Eigenschaften und mit einem Bewertungsmodul zum Bewerten des Objekts anhand der Werte, wobei das Bewertungsmodul jeden zu einer Regel bestimmten Wert mit dem der Regel zugeordneten Gewicht wichtet.

Um die Handhabung zu vereinfachen wird zum Einen vorgeschlagen, dass das Expertensystem in einem Evolutionsalgorithmus ausgehend von einem Startwert einen zeitlichen Verlauf des Gewichts bestimmt und bei Konvergenz des Gewichts einen Limes des Gewichts als neues Gewicht wählt und zum Andern, dass ein Evolutionsmodul zum Bestimmen eines zeitlichen Verlaufs mindestens eines Gewichts in einem evolutionären Algorithmus und zum Wählen eines neuen Gewichts anhand eines Konvergenzverhaltens des Verlaufs vorgesehen wird.

## Beschreibung

Die Erfindung betrifft zum Einen ein Verfahren zum Bewerten eines Objekts, wobei ein Expertensystem für eine Regel einen Wert aus Eigenschaften des Objekts bestimmt, den Wert mit einem Gewicht aus [0, 1] wichtet und anhand des Werts das Objekt bewertet und zum Ändern ein Expertensystem zum Bewerten eines Objekts anhand von Eigenschaften des Objekts, mit einem Regeleditor zum Definieren von Regeln für die Bewertung mit je einem Gewicht aus [0, 1], mit einem Regelmodul zum Bestimmen eines Werts je Regel aus den Eigenschaften und mit einem Bewertungsmodul zum Bewerten des Objekts anhand der Werte, wobei das Bewertungsmodul jeden zu einer Regel bestimmten Wert mit dem der Regel zugeordneten Gewicht wichtet.

Als "Expertensystem" bezeichnet der Fachmann einerseits Computerprogrammprodukte, die direkt in einen Arbeitsspeicher eines Computers ladbar sind und Softwarecode zum Ausführen der beschriebenen Funktionen umfassen, wenn das Computerprogrammprodukt auf dem Computer ausgeführt wird. Synonym wird mit demselben Begriff auch der Computer benannt, auf dem dieses Computerprogrammprodukt ausgeführt wird.

Verfahren und Expertensysteme der vorgenannten Art kommen insbesondere zum Einsatz, um die Wahrscheinlichkeit eines Betrugsversuchs für eine Anfrage nach einer Kreditkartentransaktion (als "Objekt" der Bewertung) zu bewerten. Die Erkennung betrügerischer Transaktionen, sei es bei Kreditkarten oder anderen elektronischen Zahlungssystemen, ist ein gleichermaßen wichtiges wie komplexes Problem: Unter strengen zeitlichen Anforderungen muss geschlossen werden, ob eine Transaktion einen betrügerischen Hintergrund hat. Um dies mit hoher Sicherheit zu bewerkstelligen, muss eine ganze Historie von Transaktionsdaten berücksichtigt werden, da jede einzelne einzuschätzende Transaktion hierfür zu wenige Informationen enthält. Durch die enorme Anzahl anfallender Transaktionsdaten ist die Erkennung von Mustern betrügerischer Transaktionen auch für Experten eine sehr schwierige Aufgabe. Die richtige Wahl einer Regelbasis, so dass möglichst viele betrügerische Transaktionen erkannt werden, ohne reguläre Transaktionen fälschlicherweise zu verdächtigen, ist eine auch für Experten hoch komplexe Aufgabe. Deshalb sollte ein Expertensystem in der Lage sein, dem Benutzer Hinweise auf Verbesserungsmöglichkeiten der benutzten Entscheidungskriterien zu geben. Die EP 1 081 655 A1 der Anmelderin offenbart ein Expertensystem, das fuzzy formulierte Regeln für die Bewertung verwendet und die Gewichte für die Regeln durch Training mit einem neuronalen Netz bestimmt. Andere allgemein bekannte Systeme basieren ausschließlich auf neuronalen Netzen, bei denen auch die Regeln kaum interpretierbar sind. Deshalb ist es wünschenswert, wenn die Entscheidungsgrundlagen des Systems in einer verständlicheren Form, beispielsweise in Form fuzzy formulierter Regeln dargestellt werden.

Das aus EP 1 081 655 A1 bekannte Expertensystem ermöglicht dem Benutzer, die benutzten Entscheidungskriterien vorzugeben oder zu beeinflussen. Es weist zwar eine hohe Zuverlässigkeit - eine hohe Wahrscheinlichkeit für die Ermittlung von Betrugsversuchen bei einer geringen Raten von falsch-positiven Ergebnissen - auf. Die Anpassung der Regelgewichte mit neuronalen Netzen erfolgt aber ohne für den menschlichen Bediener im Einzelnen nachvollziehbare Begründung. Die dem bekannten Expertensystem innewohnende mathematische Komplexität verhindert so in der Praxis weitgehend die Berücksichtigung von "Erfahrungswissen" des Bedieners in der Anpassung der Regelgewichte.

Bentley et al. offenbaren in "Fuzzy Darwinian Detection of Credit Card Fraud" (Konferenzband der 14th Annual Fall Symposium of the Korean Information Processing Society, Oktober 2000) die Entwicklung von komplexen, fuzzy formulierten Regeln zur Erkennung betrügerischer Kreditkarten-Transaktionen mittels eines evolutionären Algorithmus. Die Regeln werden in einem einmaligen Lauf des evolutionären Algorithmus entwickelt und zur Betrugserkennung verwandt, eine manuelle Modifikation im laufenden Betrieb ist nicht möglich. Der Bediener hat auch keine Möglichkeit, Regeln selbst vorzugeben. Das beschriebene Expertensystem kann - prinzipbedingt - nicht sinnvoll mit dem Benutzer interagieren: Die Resultate des evolutionären Algorithmus werden von dem System stets bedingungslos übernommen.

### Aufgabe

Der Erfindung liegt die Aufgabe zugrunde, die Handhabung der bekannten Verfahren und Expertensysteme zu vereinfachen.

### Lösung

Ausgehend von den bekannten Verfahren wird nach der Erfindung vorgeschlagen, dass das Expertensystem in einem Evolutionsalgorithmus ausgehend von einem Startwert einen zeitlichen Verlauf des Gewichts bestimmt und bei Konvergenz des Gewichts einen Limes des Gewichts als neues Gewicht wählt. Im Rahmen eines erfindungsgemäßen Verfahrens werden die (von einem menschlichen Bediener) definierten Regeln also nicht nur bestimmungsgemäß angewendet, sondern außerdem automatisch selbst in Bezug auf ihre Relevanz bewertet und entsprechend dieser Bewertung mit einem neuen, gegebenen Falls geänderten Gewicht versehen. Kriterium für die Relevanz einer Regel ist im Rahmen des erfindungsgemäßen Verfahrens das Konvergenzverhalten des Gewichts der Regel in einem evolutionären Algorithmus.

Evolutionäre Algorithmen sind bei der Optimierung von Zielfunktionen mit einem unbekannten, jedoch im Wesentlichen stetigen Verhalten häufig eine sehr gut einsetzbare und flexible Heuristik. Sie wenden grundlegende Prinzipien der natürlichen Evolution zur Optimierung an, indem Elemente des Suchraumes (so genannte Individuen) mutiert, rekombiniert und selektiert werden, wobei diese Schleife mehrfach wiederholt wird. Ein evolutionärer Algorithmus hat für die Optimierung der Gewichtsfaktoren mehrere Vorteile: zum Einen ist der Einfluss der Gewichtsfaktoren auf die Güte der Gesamtleistung des Systems zwar für jede einzelne Regel womöglich noch gut nachvollziehbar, für die Gesamtheit der Regeln jedoch nur schwer abzuschätzen. Werden beispielsweise die Gewichtsfaktoren von vier oder fünf Regeln zugleich geändert, so ist es in den meisten Fällen mit klassischen Optimierungsverfahren sehr komplex zu berechnen, wie sich die Güte des resultierenden Systems verändert.

Die Änderung der Erkennungsgüte des Expertensystems ist bei kleinen Modifikationen der Gewichte der Regeln in den meisten Fällen nur gering. Denn alle Operatoren, die zur Auswertung von fuzzy formulierten Regeln verwendet werden (insbesondere Inferenz, Aggregation und Defuzzyfizierung) zeigen ein "glattes", also stetiges Verhalten: Bekommt beispielsweise eine der Fuzzy-Mengen, die in die Aggregation einfließen, einen leicht veränderten Gewichtsfaktor, so werden gängige Aggregationsfunktionen wie die Maximumsfunktion auch nur eine leicht veränderte Fuzzy-Menge ausgeben, was wiederum bei der Mehrzahl der Defuzzyfizierungsverfahren (wie "Center of Gravity") nur eine kleine Änderung der Ausgabe bewirkt.

Die Konvergenz des Verlaufs des Gewichts in einem Evolutionsalgorithmus lässt sich sowohl automatisiert, als auch für den menschlichen Bediener intuitiv leicht als Hinweis auf die Qualität eines gewählten Gewichts interpretieren: Ein nicht oder nur langsam konvergierender Verlauf weist auf ein wenig relevantes, ein schnell konvergierender Verlauf auf ein stark relevantes Gewicht hin. Für ein Gewicht, das schon früh im Lauf der Evolution einen bestimmten Wert annimmt und diesen beibehält, kann vermutet werden, dass dieser Wert (unabhängig von den anderen Gewichten) gut ist. Gewichte, die sich andererseits (abhängig vom Verlauf anderer Gewichte) erst einschwingen oder oszillieren, sind anscheinend von anderen Gewichten abhängig; die zugehörigen Regeln sollten deshalb im Zusammenhang betrachtet werden.

Ein erfindungsgemäßes Verfahren ermöglicht damit einerseits eine automatisierte Anpassung der Gewichte, andererseits die Generierung von sowohl mathematisch begründeten als auch anschaulich nachvollziehbaren Vorschlägen für die manuelle Anpassung oder beliebige Zwischenstufen zwischen reinem Automatismus und reinem Handbetrieb. Der Bediener eines erfindungsgemäßen Verfahrens erfasst intuitiv einerseits die Qualität der gewählten Gewichte und kann andererseits eine (automatisch vorgeschlagene) Änderung mit seinem "Erfahrungswissen" abgleichen - und sie entsprechend manuell korrigieren.

Bevorzugt wählt nach einem erfindungsgemäßen Verfahren das Expertensystem ein neues Gewicht unterhalb des Startwerts, wenn das Gewicht nach einer Grenzzeit nicht konvergiert. Die Implementierung einer Grenzzeit für die Konvergenz des Evolutionsalgorithmus ist wiederum anschaulich gut visualisier- und nachvollziehbar. Die Reduzierung des Gewichts bei mangelnder Konvergenz stabilisiert das Gesamtsystem.

Vorzugsweise ist in einem erfindungsgemäßen Verfahren die Regel eine logische Verknüpfung von numerischen, kategorialen und/oder fuzzy Ausdrücken. Durch die Beschränkung auf fuzzy Formulierungen (und die gegebenen Falls erforderliche Umformulierung) werden in dem bekannten Verfahren zumindest einzelne Regeln für den menschlichen Bediener intuitiv nicht mehr nachvollziehbar. (Beispielsweise lässt sich der Test, ob die eine Kreditkartentransaktion anfragende Person männlich oder weiblich ist, nicht sinnvoll fuzzy formulieren, da die Modellierung solch scharfer Konzepte dem Sinn der Fuzzy-Logik, inhärent unscharfe Eigenschaften zu modellieren, entgegensteht. ) Das erfindungsgemäße Verfahren vereinfacht schon durch die Möglichkeit, zweiwertige Kriterien (wie nach dem Geschlecht) auch zweiwertig zu formulieren, das Verständnis des Bedieners. Die Verknüpfung verschiedener Kriterien, insbesondere auch von numerischen, kategorialen und/oder fuzzy formulierten Ausdrücken mit Kriterien der jeweils anderen Typen zu "hybriden" Regeln erleichtert weiter die Formulierung von menschlichem "Erfahrungswissen". Die logische Verknüpfung - durch Operatoren der Fuzzy-Logik als Erweiterung der Boole'schen Logik - ermöglicht die Nebenordnung von Kriterien.

Weiterhin wird bevorzugt im Rahmen eines erfmdungsgemäßen Verfahrens zum Bewerten des Objekts die Regel mit weiteren Regeln aus einer Regelbasis des Expertensystems derart hierarchisch verknüpft, dass die Konklusion einer Regel zur Bestimmung der Prämisse einer anderen Regel verwendet wird. Insbesondere werden im Rahmen eines solchen erfindungsgemäßen Verfahrens numerische, kategoriale und/oder fuzzy Konklusionen der weiteren Regeln als Prämisse der Regel logisch verknüpft.

In einem solchen erfindungsgemäßen Expertensystem liefert der Evolutionsalgorithmus dann zu jedem der untersuchten Gewichte der Regelbasis genau einen Verlauf. Die Zusammenschau mehrerer solcher Verläufe lässt sich wiederum sowohl automatisiert, als auch für den menschlichen Bediener intuitiv leicht als Hinweis auf Zusammenhänge zwischen Regeln interpretieren: Mit gleicher Frequenz alternierende Verläufe weisen beispielsweise auf einen hohen Zusammenhang der betreffenden Regeln, bei gleicher Frequenz gegenläufig alternierende Verläufe auf Regeln hin, die sich im Rahmen der Bewertung gegenseitig aufheben.

Ausgehend von den bekannten Expertensystemen wird nach der Erfindung vorgeschlagen, ein Evolutionsmodul zum Bestimmen eines zeitlichen Verlaufs mindestens eines Gewichts in einem evolutionären Algorithmus und zum Wählen eines neuen Gewichts anhand eines Konvergenzverhaltens des Verlaufs, ein Anzeigemodul zum Visualisieren des Verlaufs und zum Visualisieren des optimalen Gewichts vorzusehen. Diese Komponente ermöglicht und erleichtert dem menschlichen Bediener - insbesondere durch die grafische Darstellung der Bewertung der Regeln - die zielgerichtete Führung eines der vorstehend beschriebenen Verfahren. Ein erfindungsgemäßes Expertensystem weist damit gegenüber dem bekannten Expertensystem die vorstehend beschriebenen Vorteile auf.

In einer bevorzugten Anwendung eines erfindungsgemäßen Expertensystems ist Objekt der Bewertung ein Geschäftsvorfall oder eine Person oder eine Sache und die Bewertung liefert eine Einschätzung eines mit diesem Objekt verbundenen Risikos. In einer besonders bevorzugten Anwendung ist der Geschäftsvorfall eine Finanztransaktion und das Risiko ein Betrugsversuch, insbesondere unter Einsatz einer Kredit- oder Debitkarte oder im elektronischen Zahlungsverkehr.

Alternativ kann das erfindungsgemäße Verfahren und das erfindungsgemäße Expertensystem allgemein zur Bewertung prinzipiell beliebiger Objekte zum Einsatz kommen: Denkbar ist nicht nur die trennscharfe Risikoerkennung in der Ermittlung von risikoverdächtigen Entitäten, beispielsweise potenziell zahlungsunfähigen (oder zahlungsunwilligen) Kunden oder betrugsverdächtigen Geschäftsvorfällen und Transaktionen im Banken- oder Versicherungssektor, sondern beispielsweise auch die Anwendung im Rahmen eines CRM-Systems zur Ermittlung von Kunden, für die ein spezifisches Produktangebot von Interesse sein könnte.

### Ausführungsbeispiel

Die Erfindung wird nachfolgend anhand eines Ausführungsbeispiels erläutert.

Das erfindungsgemäße Expertensystem gibt dem Benutzer die Möglichkeit, die Gewichte der von ihm gewählten hybriden Regeln und die Regeln an sich selbstständig zu ändern. Zur Unterstützung bietet es vielfältige Veranschaulichungen des Ablaufs eines im Hintergrund ablaufenden evolutionären Algorithmus, der die Regeln bezüglich ihrer Relevanz einordnet. Das erfindungsgemäße System kann hybride Regeln verarbeiten, bei denen Prämisse und Konklusion unscharfe (fuzzy), scharfe (zweiwertige), numerische oder kategoriale Anforderungen enthalten, und erlaubt dem Benutzer so eine wesentlich einfachere und intuitivere Modellierung seines Wissens.

Ein technisches System zur Erkennung betrügerischer Transaktionen sollte natürlich in erster Linie genau dies tun, also betrügerische Transaktionen erkennen, ohne ordnungsgemäße Transaktionen fälschlicherweise als betrügerisch einzustufen. Ob dies eingehalten wird, hängt direkt von den im System verwendeten Entscheidungskriterien ab. Das erfindungsgemäße Expertensystem wählt diese Entscheidungskriterien nicht selbstständig, unterstützt den Benutzer aber aktiv darin, diese Entscheidungskriterien möglichst optimal zu wählen.

Hierzu sind die Entscheidungskriterien leicht interpretier- und modifizierbar modelliert und gleichzeitig schnell auswertbar. Weiterhin bietet das Expertensystem dem Benutzer Hilfestellungen bei der Verbesserung der Regeln. Das erfindungsgemäße Expertensystem erfüllt diese Anforderungen, indem es mehrere algorithmische Techniken modifiziert, gemäß ihrer Stärken kombiniert und neuartig erweitert:
Der Benutzer kann eine Menge von "hybriden" Regeln vorgeben, die seine Entscheidungskriterien darstellen. Dabei können diese Regeln der üblichen zweiwertigen Logik folgen (beispielsweise "Wenn Alter = 65, dann Betrug = nein"), bei denen sowohl die Prämissen als auch die Konklusion jeweils nur den Wahrheitswert 0 oder 1 haben kann. Die Regeln können auch fuzzy formuliert sein (z.B. "Wenn Alter = hoch UND Betrag = niedrig, dann Betrug = unwahrscheinlich"), wobei die Prämisse und Konklusion aus logischen Verknüpfung von Anforderungen an die Werte der Eingabegröße bestehen, die durch Fuzzy-Mengen gegeben sind. Im Gegensatz zu der klassischen Logik sind hier auch "unscharfe" Wahrheitswerte zwischen 0 und 1 möglich. Da sich menschliches Wissen in den meisten Fällen nicht auf eine rein binäre Entscheidung reduzieren lässt, ermöglicht häufig erst diese Modellierung eine angemessene Darstellung menschlichen Wissens in einem technischen System.

Eine zusätzliche Form stellen kategoriale Regeln vor, bei denen in der Prämisse die Zugehörigkeit der Daten zu bestimmten Kategorien überprüft wird (z.B. "Wenn Geschlecht = Mann, so..."). Diese Form von Regeln ist besonders für die Erkennung betrügerischer Transaktionen von Vorteil, da in diesem Anwendungsfeld eine Vielzahl kategorialer Daten anfallen.

Sind manche der zu verarbeitenden Größen reelle Zahlen, so erleichtern numerische Regeln ("Wenn Alter aus [65,80], dann...") die Modellierung von Expertenwissen. Deshalb wird auch diese Regelform explizit unterstützt.

Die verschiedenen Regeltypen (zweiwertig, kategorial, numerisch, fuzzy) lassen sich auch beliebig kombinieren: klassische zweiwertige logische Ausdrücke, fuzzy formulierte Ausdrücke und kategoriale Anforderungen lassen sich in der Prämisse beliebig kombinieren. (In der Konklusion steht jeweils nur ein Ausdruck). Da Fuzzy-Logik die zweiwertige Logik verallgemeinert, erfolgt die Auswertung aller Regeln durch die bekannten Fuzzyfizierungs-, Inferenz-, Aggregations-, und Defuzzyfizierungsverfahren der Fuzzy-Logik.

Weiterhin ist ein hierarchischer Aufbau der Regeln möglich: die Ausgaben von (selbst "hybriden") Regeln können als Eingaben nachgeschalteter "hybrider" Regeln verwendet werden. Erst dies ermöglicht es, gegliedertes Expertenwissen, welches häufig aus einer Vielzahl von aufeinander aufbauenden Überlegungen besteht, direkt in ein Regelsystem zu übertragen.

Der Benutzer kann die benutzten Fuzzy-Mengen, Kategorien und Regeln beliebig modifizieren und erweitern, bis sie nach seiner Meinung ausreichend zur Erkennung betrügerischer Transaktionen sind. Weiterhin kann er auch Regeln angeben, bei denen er sich unsicher ist, ob dies der Fall ist. Denn Regeln können ein Gewicht erhalten, eine reelle Zahl aus [0,1], mit dem das Ergebnis der Regel multipliziert wird. Diese Gewichtung erlaubt es dem Benutzer, Regeln bzgl. ihrer Wichtigkeit einzuordnen: einer Regel, deren Nützlichkeit der Benutzer nur vermutet, kann eine kleine Gewichtung gegeben werden. Dies ist insbesondere im Zusammenspiel mit der evolutionären Verbesserung der Regelgewichte von Bedeutung:
Das erfindungsgemäße Expertensystem unterstützt den Bediener durch einen im Hintergrund laufenden evolutionären Algorithmus, der zu jeder existierenden Regel ein Gewicht entwickelt, so dass das resultierende Gesamtsystem eine möglichst hohe Erkennungsrate betrügerischer Transaktionen hat, ohne ordnungsgemäße Transaktionen falsch einzuordnen.

In dem erfindungsgemäßen Expertensystem zur Betrugserkennung werden die Gewichte entwickelt. Der evolutionäre Algorithmus startet also mit den vom Benutzer vorgegebenen Regelgewichten (als "Startwert") und mutiert diese in einem ersten Schritt. Um bei der Mutation kleine Veränderungen mit hoher Wahrscheinlichkeit zu erreichen, wird zu jedem Gewicht eine normalverteilte Zufallsvariable mit Erwartungswert 0 und einstellbarer Varianz addiert. Rekombination generiert aus zwei Suchpunkten einen neuen, deren Vorteile möglichst kombinierend. Da jedes Gewicht eine reelle Zahl aus [0, 1] ist, kommt insbesondere die so genannte intermediäre Rekombination zum Einsatz, die für jede Komponente das arithmetische Mittel der entsprechenden Komponente der erzeugenden Vektoren bildet. Alternativ kommen aber auch andere Rekombinationsverfahren, wie sie die Evolutionstheorie bereitstellt, zur Anwendung.

Die Zahl der durch Mutation und Rekombination zu generierenden Individuen kann vom Benutzer eingestellt werden, genauso wie die Selektion, die entweder nur aus den neuen Individuen oder auch den alten Individuen die Besten auswählt. Die Gütebewertung eines Individuums aus Gewichten erfolgt dabei nach der Erkennungsrate des Expertensystems bei Benutzung ebendieser Gewichte anhand einer einstellbaren Historie von Transaktionsdaten.

Die evolutionäre Optimierung kann zu einem beliebigen Zeitpunkt angestoßen werden und den Benutzer somit ständig über die aktuell besten gefundenen Gewichte informieren. Der Benutzer kann anhand dieser Informationen die Regeln jederzeit interaktiv modifizieren.

Das erfindungsgemäße Expertensystem bietet dem Bediener alle Möglichkeiten einer modernen graphischen Oberfläche, Regeln auszuwählen und ihren Verlauf graphisch zu veranschaulichen. Mit diesen erweiterten Möglichkeiten kann der Bediener wesentlich mehr Information aus dem evolutionären Algorithmus gewinnen als aus der Kenntnis der besten Lösung allein. Nach der Änderung der hybriden Regeln und ihrer Gewichte kann der evolutionäre Algorithmus erneut gestartet werden. Somit kann der Benutzer die Entscheidungskriterien in ständiger Interaktion mit den graphisch veranschaulichten Resultaten des evolutionären Algorithmus weiterentwickeln, um das erfindungsgemäße Expertensystem zu verbessern oder an neu aufgetretene Betrugsmuster anzupassen.

## Patentansprüche

1. Verfahren zum Bewerten eines Objekts, wobei ein Expertensystem für eine Regel einen Wert aus Eigenschaften des Objekts bestimmt, den Wert mit einem Gewicht aus [0, 1] wichtet und anhand des Werts das Objekt bewertet, ***dadurch gekennzeichnet, dass*** das Expertensystem in einem Evolutionsalgorithmus ausgehend von einem Startwert einen zeitlichen Verlauf des Gewichts bestimmt und bei Konvergenz des Gewichts einen Limes des Gewichts als neues Gewicht wählt.

2. Verfahren nach dem vorgenannten Anspruch, ***dadurch gekennzeichnet, dass*** das Expertensystem ein neues Gewicht unterhalb des Startwerts wählt, wenn das Gewicht nach einer Grenzzeit nicht konvergiert.

3. Verfahren nach einem der vorgenannten Ansprüche, ***dadurch gekennzeichnet, dass*** die Prämisse der Regel eine logische Verknüpfung von numerischen, kategorialen und/oder fuzzy Ausdrücken ist.

4. Verfahren nach einem der vorgenannten Ansprüche, ***dadurch gekennzeichnet, dass*** zum Bewerten des Objekts die Regel mit weiteren Regeln aus einer Regelbasis des Expertensystems hierarchisch verknüpft ist.

5. Verfahren nach dem vorgenannten Anspruch, ***dadurch gekennzeichnet, dass*** numerische, kategoriale und/oder fuzzy Konklusionen der weiteren Regeln als Prämisse der Regel logisch verknüpft sind.

6. Expertensystem zum Bewerten eines Objekts anhand von Eigenschaften des Objekts, mit einem Regeleditor zum Definieren von Regeln für die Bewertung mit je einem Gewicht aus [0, 1], mit einem Regelmodul zum Bestimmen eines Werts je Regel aus den Eigenschaften und mit einem Bewertungsmodul zum Bewerten des Objekts anhand der Werte, wobei das Bewertungsmodul jeden zu einer Regel bestimmten Wert mit dem der Regel zugeordneten Gewicht wichtet, ***gekennzeichnet durch*** ein Evolutionsmodul zum Bestimmen eines zeitlichen Verlaufs mindestens eines Gewichts in einem evolutionären Algorithmus und zum Wählen eines neuen Gewichts anhand eines Konvergenzverhaltens des Verlaufs.

7. Expertensystem nach dem vorgenannten Anspruch, ***gekennzeichnet durch*** ein Anzeigemodul zum Visualisieren des Verlaufs.

8. Expertensystem nach einem der Ansprüche 6 oder 7, ***gekennzeichnet durch*** ein Anzeigemodul zum Visualisieren des neuen Gewichts.

9. Expertensystem nach einem der Ansprüche 6 bis 8, ***dadurch gekennzeichnet, dass*** Objekt der Bewertung ein Geschäftsvorfall oder eine Person oder eine Sache ist und die Bewertung des Objekts eine Einschätzung eines mit dem Objekt verbundenen Risikos liefert.

10. Expertensystem nach dem vorgenannten Anspruch, ***dadurch gekennzeichnet, dass*** der Geschäftsvorfall eine Finanztransaktion und das Risiko ein Betrugsversuch ist.
